# EUROPEAN PATENT APPLICATION

(11) **EP 2 713 026 A2**
(43) Date of publication of application: **02.04.2014**
(21) Application number: 13185439.0
(22) Date of filing: 20.09.2013
(51) Int. Cl.: F02C 3/22, F02C 9/40

(54) **Method and System for Controlling CO2 Emissions**

(30) Priority: 27.09.2012 US 201213629512
(71) Applicant: General Electric Company, Schenectady, New York 12345 (US)
(72) Inventor: Dinu, Constantin, Houston, TX 72613 (US); Kessler, Daniel Aaron, Houston, TX 72613 (US)
(74) Representative: Cleary, Fidelma

(57) **Abstract**

A system, including a turbine fluid supply system, including a fuel supply assembly (16), including a first fuel supply (70) configured to supply a first fuel to a gas turbine engine (12); and a second fuel supply (72) configured to supply a second fuel to the gas turbine engine (12), wherein the first fuel has a greater carbon content than the second fuel, and a diluent supply assembly (18) comprising at least one diluent supply (80) configured to supply at least one diluent to the gas turbine engine (12); and a controller (37) configured to control the first fuel supply (70), the second fuel supply (72), or the at least one diluent supply (80) to adjust a percentage of carbon in a combustor of the gas turbine engine (12) to maintain a ratio of carbonaceous emissions in an exhaust gas per unit of energy produced by the gas turbine engine at or below a threshold ratio.

## Description

### BACKGROUND OF THE INVENTION

The subject matter disclosed herein relates to the controlling of exhaust gas in gas turbine engines. Specifically, the monitoring of exhaust gas and controlling the amount of specific combustion by-products per a unit of energy produced.

In general, gas turbine engines combust a mixture of compressed air and fuel to produce combustion gases. The combustion gases may flow through one or more turbine stages to generate rotational energy for use by a load and/or a compressor. The combustion gases may include various combustion by-products, such as carbon monoxide (CO), nitrogen oxides (NOₓ), carbon dioxide (CO₂), and so on. These by-products, or emissions, are generally subject to regulations, which are becoming increasingly stringent.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a controller having instructions to control a first fuel supply, a second fuel supply, or at least one diluent supply to adjust a percentage of carbon in a combustor of a gas turbine engine to maintain a ratio of carbonaceous emissions in an exhaust gas per unit of energy produced by the gas turbine engine at or below a threshold ratio.

In a second aspect, the invention resides in a system including a turbine fluid supply system, including a fuel supply assembly, including a first fuel supply configured to supply a first fuel to a gas turbine engine; and a second fuel supply configured to supply a second fuel to the gas turbine engine, wherein the first fuel has a greater carbon content than the second fuel, and a diluent supply assembly comprising at least one diluent supply configured to supply at least one diluent to the gas turbine engine; and the controller as described above.

In a third aspect, the invention resides in a method including receiving feedback from at least one sensor, monitoring a ratio of carbonaceous emissions created per unit of energy produced by a gas turbine engine based on the feedback, determining whether the ratio is greater than a threshold ratio, and controlling a first fuel supply, a second fuel supply, or at least one diluent supply to adjust a percentage of carbon in a combustor of the gas turbine engine to maintain the ratio at or below a threshold ratio.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a diagrammatic illustration of a gas turbine system configured to maintain a ratio of emitted carbon dioxide gas per unit of energy produced, at or below a threshold ratio;
FIG. 2 is a diagrammatic illustration of the gas turbine system of FIG. 1 with the controller controlling a fuel assembly and a diluent assembly to maintain a ratio of carbon dioxide gas created per unit of energy produced, below a threshold ratio;
FIG. 3 is a diagrammatic illustration of the controller in FIG. 2 controlling fuel and diluent injection into the fuel nozzle; and
FIG. 4 is a flow chart of a method for controlling a ratio of carbon dioxide gas created per unit of energy produced in the gas turbine system of FIG. 1.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As discussed in detail below, the disclosed embodiments include emissions control features (e.g., instructions executed by a controller) to control carbonaceous emissions (e.g., CO₂ emissions) per unit of energy produced (e.g., MWhr) by controlling the fluids (e.g., fuels and diluents) supplied to each fuel nozzle and/or combustor of a combustion system, e.g., gas turbine engine. For example, a controller of the gas turbine engine may increase the flow of one or more diluents (e.g., steam, nitrogen, or other diluents) into the fuel nozzles and/or combustors to increase the percentage of diluents relative to fuel in the overall fluid mixture, thereby augmenting power of the gas turbine engine, reducing the percentage of carbon in the overall fluid mixture (e.g., gas and/or liquid mixture), and thus reducing the carbonaceous emissions (e.g., CO₂ emission) in the exhaust gas per unit of energy produced. In certain embodiments, the controller of the gas turbine engine may increase the flow of diluents to reduce carbonaceous emissions (e.g., CO₂ emission) in the exhaust gas during low load conditions, startup conditions, shut down conditions, or other conditions based on threshold ratios (e.g., regulatory limits) for the carbonaceous emissions per unit of energy produced. Furthermore, the controller of the gas turbine engine may decrease the flow of diluents during high load conditions, steady state conditions, or other conditions based on threshold ratios (e.g., regulatory limits) for the carbonaceous emissions per unit of energy produced. For example, the controller of the gas turbine engine may generally control the diluent flow to the fuel nozzles and/or combustors to maintain a ratio of carbonaceous emissions (e.g., CO₂ emission) per unit of energy produced by the gas turbine engine below a threshold ratio.

Additionally or alternatively, the controller of the gas turbine engine may selectively control a fuel composition (e.g., a mixture of two or more different fuels) supplied into the fuel nozzles and/or combustor, thereby reducing the percentage of carbon in the fuel composition and the overall fluid mixture, and thus reducing the carbonaceous emissions (e.g., CO₂ emission) in the exhaust gas per unit of energy produced. For example, the controller of the gas turbine engine may selectively decrease flow of a first fuel (e.g., a high carbon based fuel) and/or increase flow of a second fuel (e.g., a low carbon fuel and/or no carbon fuel) to provide a low carbon fuel composition (e.g., fuel mixture) into the fuel nozzles and/or combustor, thereby reducing the percentage of carbon in the fuel composition and the overall fluid mixture, and thus reducing the carbonaceous emissions (e.g., CO₂ emission) in the exhaust gas per unit of energy produced. In certain embodiments, the first fuel may include natural gas, whereas the second fuel may include hydrogen. The hydrogen supplements the natural gas while also diluting the carbon content in the overall fuel mixture. In certain embodiments, the controller of the gas turbine engine may selectively decrease flow of the first fuel (e.g., a high carbon based fuel) and/or increase flow of the second fuel (e.g., a low carbon fuel and/or no carbon fuel) to reduce carbonaceous emissions (e.g., CO₂ emission) in the exhaust gas during low load conditions, startup conditions, shut down conditions, or other conditions based on threshold ratios (e.g., regulatory limits) for carbonaceous emissions per unit of energy produced. Furthermore, the controller of the gas turbine engine may selectively increase flow of the first fuel (e.g., a high carbon based fuel) and/or decrease flow of the second fuel (e.g., a low carbon fuel and/or no carbon fuel) during high load conditions, steady state conditions, or other conditions based on threshold ratios (e.g., regulatory limits) for carbonaceous emissions per unit of energy produced.

In general, the disclosed embodiments may selectively control the use of diluents and fuel composition to control a ratio of carbonaceous emissions (e.g., CO₂ emission) per unit of energy produced based on various feedback, such as sensor feedback indicative of the fuel composition, exhaust composition, power output and/or load, temperatures of fuel and diluents, and various other operating parameters of the gas turbine engine. The disclosed embodiments may be particularly beneficial for simple cycle gas turbine systems, e.g., standalone gas turbine engines without any steam turbine or secondary cycle as part of a combined cycle system. Furthermore, the diluents may be supplied from various plant sources, such as nitrogen from an air separation unit (ASU) and/or steam from a boiler or gasification system. Likewise, the fuels may be supplied from various plant sources, storage tanks, and/or pipelines, such as syngas from a gasification system, hydrogen from a storage tank, and/or hydrogen from a gas treatment system (e.g., fuel cracking and/or fuel reforming using syngas).

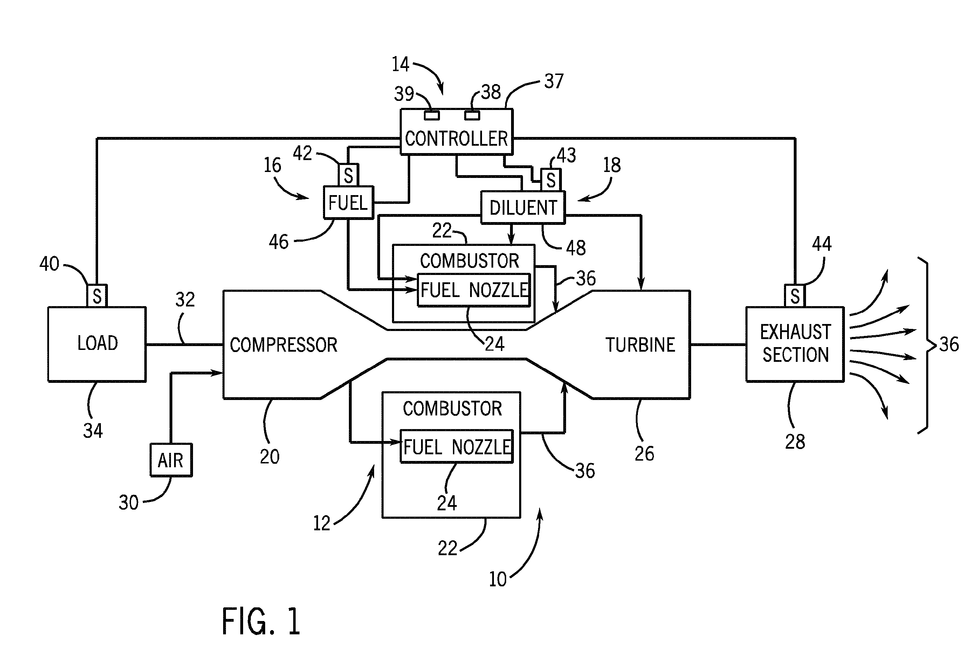

FIG. 1 is a diagrammatic illustration of a gas turbine system 10 configured to maintain a ratio of carbon dioxide gas created per unit of energy produced, at or below a threshold ratio of CO₂ gas emitted per unit of energy produced. The gas turbine system 10 may include a gas turbine 12, a controller assembly 14, a fuel supply assembly 16, and a diluent supply assembly 18. These assemblies work together to maintain the CO₂ emissions/energy ratio at or below the threshold ratio.

As illustrated, the gas turbine 12 includes a compressor 20, combustor 22, fuel nozzle 24, turbine 26, and exhaust section 28. When operating, the gas turbine 12 pulls air 30 into the compressor 20, which then compresses the air 30 and moves it to the combustor 22. In the combustor 22, the fuel nozzle 24 injects fuel that mixes with the compressed air creating a fuel air mixture. The fuel air mixture combusts in the combustor 22 to generate hot combustion gases, which flow downstream into the turbine 26. As the hot combustion gases move through the turbine 26 they cause rotors to spin. The spinning rotors in the turbine 26 cause a shaft 32 to rotate. The shaft 32 connects to a load 34, such as a generator that uses the rotational energy of the shaft 32 to produce electricity. After passing through the turbine 26, the hot combustion gases vent as exhaust gases 36 into the environment through the exhaust section 28. The exhaust gas 36 may include gases such as carbon dioxide (CO₂), carbon monoxide (CO), nitrogen oxides (NOₓ), and so on. These by-products, or emissions, are generally subject to regulations, which are becoming increasingly stringent. For example, the Environmental Protection Agency (EPA) may have an efficiency standard, of CO₂ emissions per energy unit produced. For example, the disclosed embodiments may enable the gas turbine operating in combined cycle to emit less than approximately 1000 pounds of CO₂ per megawatt hour of energy produced (1000 lbs/MWhr).

The controller assembly 14 executes instructions to control the fuel assembly 16 and the diluent assembly 18 to maintain CO₂ emissions per energy unit produced below a threshold ratio (e.g., an EPA standard). The controller assembly 14 includes a controller 37, processor 38, memory 39, and sensors 40, 42, 43, and 44. The controller 37 receives data from the sensors 40, 42, 43, and 44; the processor 38 then executes instructions stored on the memory 39 based on the sensor data to control the fuel assembly 16 and the diluent assembly 18. The sensors 40, 42, 43, and 44 provide the controller 37 with different kinds of data including CO₂ levels in the exhaust gas 36, carbon content in the fuel 46, temperature of the fuel 46, temperature of the diluents 48, and load data from load 34. In the illustrated embodiment, all four types of sensors 40, 42, 43, and 44 are used by the controller 37. In other embodiments, the controller 37 may use load sensor 40 alone; use the carbon content sensor 42 with the load sensor 40; use the emissions sensor 44 with the load sensor 40; or use all four sensors together to maintain the system 10 at or below the threshold ratio.

The sensor 40 measures the load and/or output, e.g., electricity produced, of the load 34. As explained above, the Environmental Protection Agency (EPA) has efficiency standards that limit the creation of CO₂ per unit of energy produced, e.g., 1000 pounds per megawatt hour (1000 lbs/MWhr) for combined cycle applications. Less energy production means a reduced amount of allowable CO₂ emissions. The controller 37 receives load data (i.e., energy produced) from the sensor 40. The controller 37 may combine the load data with known variables in the gas turbine system 10 to determine whether the gas turbine 12 is operating above the threshold ratio. For example, the controller 37 may know what amounts, types, and temperatures of fuel 46 and diluent 48 produce a specific amount of CO₂ at a specific load, (i.e., CO₂ emissions/energy) using a database of known values, equations, models, etc. If the controller 37 predicts that the gas turbine engine 12 is operating above the threshold ratio, then the controller 37 executes instructions to control the fuel assembly 16 and/or the diluent assembly 18 to change the CO₂ emissions/energy ratio. Accordingly, the controller 37 may execute instructions to automatically adjust the fuel assembly 16 and/or the diluent assembly 18 until the CO₂ emissions/energy ratio is at or below the threshold ratio, using the sensor 40 with or without the sensors 42 and 44.

The gas turbine system 10 may also use a carbon content sensor 42 with the load sensor 40 to maintain the system 10 at or below the threshold ratio. In some embodiments, the sensor 42 may be a fuel carbon content sensor and a fuel temperature sensor. In still other embodiments, there may be a carbon content sensor and temperature sensor for the fuel. Specifically, the controller 37 receives data from the carbon content sensor 42 indicating how much carbon is in the fuel 46 and its temperature. The controller 37 may then execute instructions to predict CO₂ emissions based on known values (i.e., increased fuel temperature means more energy is introduced into the system resulting in lower CO₂ emissions per energy unit produced). If the controller 37 combines this information with load data from sensor 40, then the controller 37 can determine whether the system 10 is operating at or below the threshold ratio. Specifically, the controller 37 may execute instructions to predict if the gas turbine engine system 10 will produce more CO₂ per unit of energy than the threshold ratio. Depending on the ratio, the controller 37 may execute instructions to change the amount and/or composition of fuel 46 that enters the fuel nozzle 24. In some embodiments, the controller 37 may control the ratio by adjusting fuel 46 (e.g., change the type of fuel and/or amount of fuel) and the diluent 48 (e.g., change the type of diluents and/or amount of diluents) that enters the gas turbine system 10. For example, to decrease CO₂ emissions/energy the controller may execute instructions that reduce consumption of fuel 46 and increases diluent 48 use in the gas turbine system 10, thereby reducing the CO₂ emissions/energy ratio. As illustrated, diluent 48 may enter the gas turbine 12 at different locations including the fuel nozzle 24, the combustor 22, and/or the turbine 26.

The sensor 44 connects to the exhaust section 28 and monitors the carbon dioxide levels in the exhaust gas 36 as it exits the gas turbine system 10. In other embodiments, the sensor 44 may connect to different locations on the gas turbine 12. For example, the sensor 44 may connect to and measure CO₂ levels in the turbine 26 or the combustor 22. In still other embodiments, a CO₂ sensor 44 may connect to the combustor 22, the turbine 26, and the exhaust section 28 to provide redundant CO₂ gas measurement. The controller 37 may then calculate the ratio of CO₂ gas per unit of energy produced using the CO₂ sensor 44 with the load sensor 40. The controller 37 then compares this CO₂ emissions/energy ratio against the threshold ratio to determine whether the gas turbine system 10 is exceeding the threshold ratio. If the CO₂ emissions/energy ratio exceeds the threshold ratio, then the controller 37 executes instructions to adjust the amount or content of fuel 46 and/or diluent 48 entering the gas turbine 12 with the fuel assembly 16 and the diluents assembly 18.

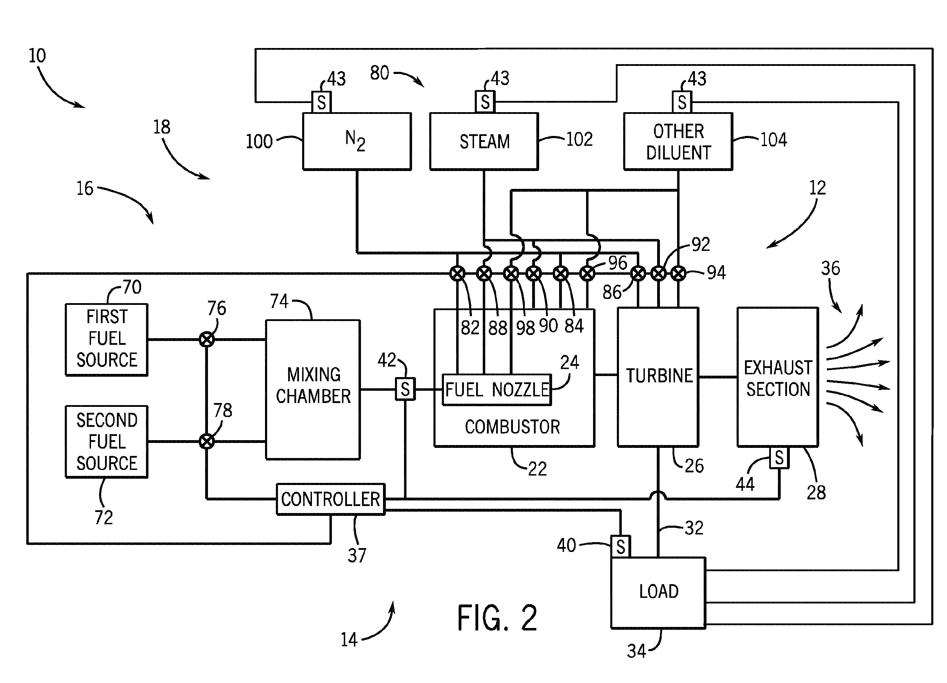

FIG. 2 is a diagrammatic illustration of the gas turbine system 10 of FIG. 1 with the controller 37 controlling the fuel supply assembly 16 and the diluent supply assembly 18 to reduce emissions (e.g., CO₂ emissions) and/or augment the power of the gas turbine system 10. The fuel assembly 16 includes a first fuel source 70, a second fuel source 72, a mixing chamber 74, a first valve 76, and a second valve 78. In other embodiments, there may be more than two fuel source (e.g., 3, 4, 5, 6, or more fuel sources), more than two valves (e.g., 3, 4, 5, 6, or more valves), more than one mixing chamber (e.g., 2, 3, 4, 5, or more mixing chambers), in different configurations. For example, there may be three fuel sources with corresponding valves and a single mixing chamber that combines the different fuels.

In operation, the controller 37 executes instructions to selectively route fuel to the mixing chamber 74 from the first fuel source 70 by controlling valve 76, and the second fuel source 72 using valve 78. The fuels 70 and 72 enter and mix within the mixing chamber 74, and then flow to the fuel nozzle 24 where they combust in the combustor 22. The first fuel source 70 may be a primary fuel source that provides a fossil fuel (e.g., carbon based fuel). The second fuel source 72 may be a secondary fuel source that provides a low carbon or no carbon content fuel (e.g., hydrogen). As explained above, the controller 37 executes instructions to control the amount of the first fuel 70 and the second fuel 72 in response to sensor 40; sensors 40 and 42; sensors 40 and 44; or all of the sensors 40, 42, 43, and 44. Specifically, the controller 37 executes instructions to adjust the carbon content of the fuel entering the fuel nozzle 24 by opening and closing valves 76 and 78, which changes the amounts of the fuels 70 and 72 in the mixing chamber 74. In this manner, the controller 37 may change the carbon content of the fuel mixture to be combusted, and therefore the ratio of CO₂ per unit of energy produced.

For example, when the gas turbine 12 experiences a high load (e.g., peak hours of electricity use), it may emit more CO₂ along with a corresponding increase in energy production. In these high load situations, the system 10 may not exceed the threshold level of CO₂ emitted per energy unit produced. The controller 37 may therefore execute instructions to open valve 76 and keep valve 78 shut, so that the first fuel source 70 flows through the mixing chamber 74 for combustion in the combustor 22. By contrast, in situations of low loads, the gas turbine may be less efficient and emit more CO₂ per unit of energy produced than the threshold ratio without employing the present control techniques. In response, the controller 37 may execute instructions to control valves 76 and 78 to change the carbon content of the fuel mixture entering the fuel nozzle 24. By increasing the second fuel 72 (e.g., low or no carbon fuel) and reducing the first fuel 70 (e.g., carbon based fuel), the controller 37 decreases the carbon content of the fuel mixture and the exhaust gas (e.g., less CO₂ in the exhaust gas). The controller 37 may also execute instructions to do the opposite if the load increases (i.e., increase the first fuel 70 and reduce the second fuel 72). The feedback from sensor 40; the combination of sensors 40 and 42; the combination of sensors 40 and 44; or all the sensors 40, 42, 43, and 44 together advantageously allow the controller 37 to change the fuel mixture, thereby reducing CO₂ emissions per unit of energy produced below the threshold ratio.

The diluent assembly 18 includes diluent sources 80 and valves 82, 84, 86, 88, 90, 92, 94, 96, and 98. The diluent sources 80 may include a nitrogen (N₂) source 100, a steam source 102, and another type of diluent 104. In other embodiments there may be more than three diluents (e.g., 4, 5, 6, 7, or more diluents). These diluent sources 80 enable power augmentation while reducing fuel requirements on the gas turbine 12, thereby also reducing carbon content per volume of fluids in the combustion and reducing CO₂ emissions in the exhaust gas. The system 10 may therefore advantageously use diluents sources 80 to reduce CO₂ gas emission per unit of energy produced below a threshold ratio. Moreover, the system 10 may monitor the temperature of the diluents with sensor(s) 43 to better predict how much diluent should be injected (i.e., increased diluent temperature means more energy is introduced into the system 10 resulting in lower CO₂ emissions per energy unit produced).

The controller 37 executes instructions to control the release of the diluents 100, 102, and 104 through the valves 82, 84, 86, 88, 90, 92, 94, 96, and 98. Advantageously, the controller 37 may execute instructions to selectively control diluent use in the gas turbine 12. Specifically, the controller 37 may execute instructions to inject any one or more of the diluents into the fuel nozzle 24 by controlling valves 82, 88, and 98; into the combustor 22 using valves 84, 90, and 96; and/or into the turbine 26 using valves 86, 92, and 94. Accordingly, the controller 37 may customize diluent use through valves 82, 84, 86, 88, 90, 92, 94, 96, and 98. For example, the controller 37 may execute instructions to inject nitrogen 100 into the fuel nozzle 24 with valve 82, steam 102 into the combustor 22 with valve 90, and another diluent 104 into the turbine 26 with the valve 94. In still other embodiments, all three diluent sources 100, 102, and 104 may be injected into the fuel nozzle 24, combustor 22, and/or the turbine 26. In still other embodiments, the system 10 may use sensor(s) 43 to determine, which diluent would be most advantageous to inject based on the diluents temperature (i.e., injecting diluents with an increased temperature means more energy is introduced into the system 10 resulting in lower CO₂ emissions per energy unit produced).

In some embodiments, the system 10 uses the fuel assembly 16 and the diluent assembly 18 together to change the ratio of CO₂ emissions per unit of energy produced below a threshold ratio. For example, in situations of low loads the gas turbine 12 may be less efficient and emit more CO₂/energy than the threshold ratio without employing the disclosed control techniques. The controller 37 may respond by executing instructions to inject power augmenting diluents 48 with the diluent assembly 18 and simultaneously decrease fuel and/or decrease the carbon content in the fuel 46 with fuel assembly 16. The two assemblies 16 and 18 working together may advantageously maintain the gas turbine system 10 below the threshold ratio.

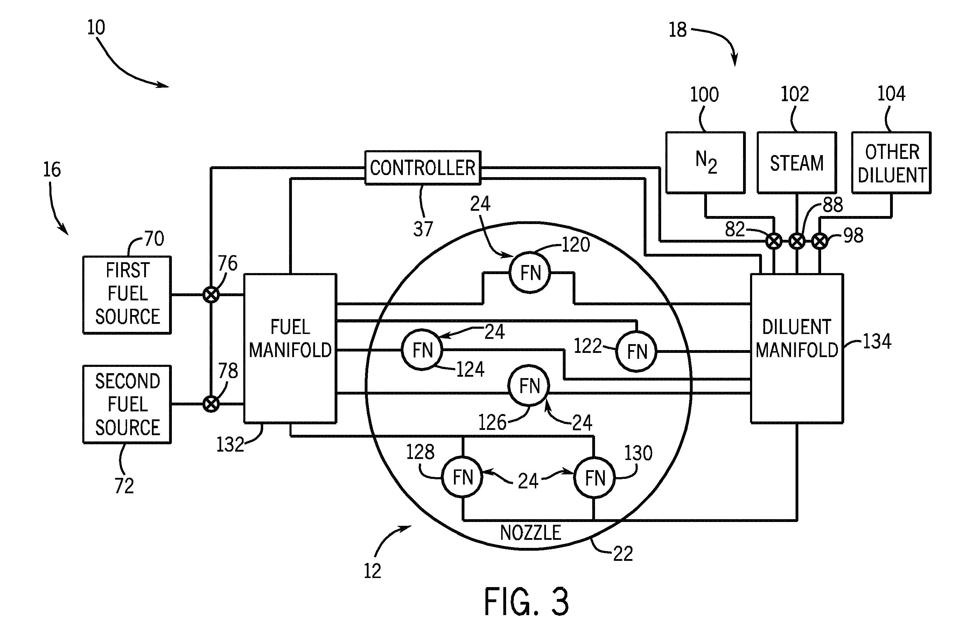

FIG. 3 is a diagrammatic illustration of the controller 37 in FIG. 2, controlling fuel and diluent injection into a plurality of the fuel nozzles 24. The fuel nozzles 24 include individual fuel nozzles 120, 122, 124, 126, 128, and 130. While the present embodiment includes six fuel nozzles, other embodiments may include different numbers of nozzles, e.g., 1, 2, 3, 4, 5, 6, 7, 8, 9, 10 or more nozzles. These fuel nozzles 120, 122, 124, 126, 128, and 130 may inject fuel, oxidant (e.g., air), and/or diluents into the combustor 22. In the present embodiment, fuel and diluents move through a respective fuel manifold 132 and a diluent manifold 134. The oxidant (e.g., air) maybe provided to each fuel nozzle 120, 122, 124, 126, 128, and 130 through the combustor 22 (e.g., a head end) and a flow conditioner.

The manifolds 132 and 134 may distribute fuel and diluent to some or all of the individual nozzles 120, 122, 124, 126, 128, and 130. In certain embodiments, the controller 37 may execute instructions to operate valves inside the fuel manifold 132 and diluents manifold 134 to control which nozzles 120, 122, 124, 126, 128, and 130 receive a particular fuel, fuel mixture, oxidant (e.g., air), diluent, and/or diluent mixture. The controller 37 may execute instructions to enable the flow of the first fuel 70, second fuel 72, or both fuels 70 and 72 (e.g., mixture), the nitrogen 100, the steam 102, the other diluents, into one or a mixture of the diluents into one or more of the fuel nozzles 120, 122, 124, 126, 128, and 130 in a uniform or differential manner.

For example, the fuel manifold 132 may send fuel to nozzles 120, 122, 124, 128, and 130, but not 126. In other embodiments, the fuel manifold 132 may direct a first fuel source 70 into nozzles 120, 122, and 124, and a second fuel source 72 into nozzles 126, 128, and 130. The diluents manifold 134 may operate in a similar manner. For example, the diluents manifold 134 may only send nitrogen from source 100 to nozzle 126. In other embodiments, the manifold 134 may send a mixture of the three diluent sources 100, 102, and 104 to nozzle 126. In still other embodiments, the manifold 134 may send nitrogen from source 100 to nozzle 120, steam from source 102 to nozzle 128, and another diluent from source 104 to the nozzle 130. Other combinations are possible with the different nozzles 120, 122, 124, 126, 128, and 130 receiving different fuels, fuel mixtures, diluents, and/or diluent mixtures as well as the oxidant (e.g., air). The embodiment in FIG. 3 enables the controller 37 to selectively control the flow of desired fuels or fuel mixtures and the flow of desired diluents or diluent mixtures into each nozzle 120, 122, 124, 126, 128, and 130. Accordingly, the controller 37 may control the amount of CO₂ gas created in the combustor 22 by controlling the amount or type of fuel and/or diluent entering the nozzle 24. In this manner, the controller 37 may adjust the ratio of CO₂/energy in the system 10 with feedback from the sensors 40, 42, 43, and 44.

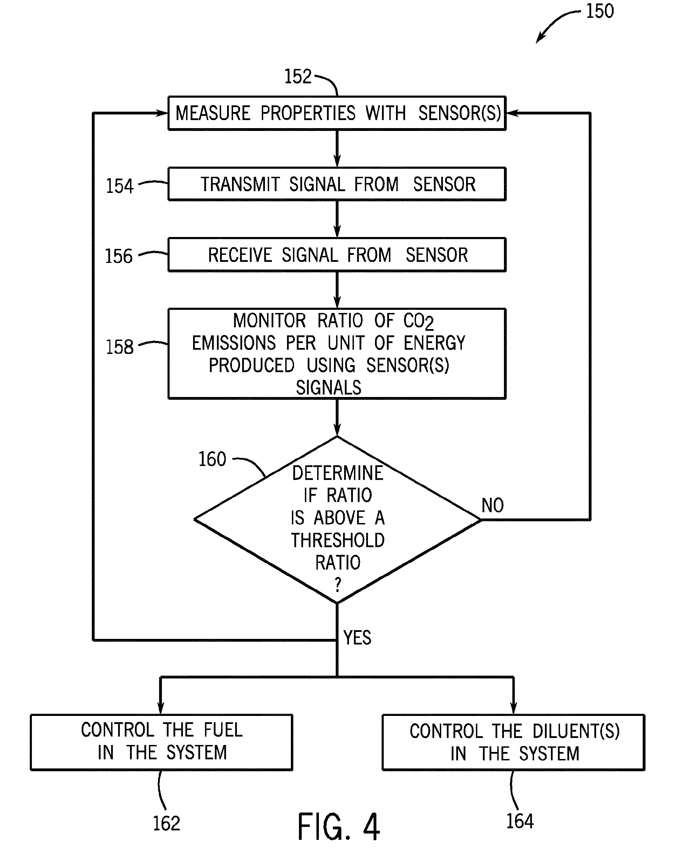

FIG. 4 is a flow chart of a method 150 for controlling the ratio of CO₂ emissions per unit of energy produced in the gas turbine system 10 of FIG. 1. First, as represented by block 152, the sensors 40, 42, 43, and/or 44 measure properties in the gas turbine system 10. Specifically, sensor 40 measures loads, sensor 42 measures carbon content and temperature in the fuel 46, sensor(s) 43 measures temperature of the diluents, and sensor 44 measures CO₂ levels in the exhaust gas 36. The sensors 40, 42, 43, and/or 44 transmit the information in a signal to the controller 37, represented by block 154. The controller 37 receives the signals from the sensors 40, 42, 43, and/or 44, represented by block 156. The controller 37 then monitors the sensors 40, 42, 43, and/or 44 to determine the actual or predicted CO₂ levels in the exhaust gas 36, represented by block 158. As explained above, the controller 37 may execute instructions to adjust the amount of CO₂ gas created per unit of energy produced in the system 10 using the fuel assembly 16 and/or the diluents assembly 18 with information received from the sensors 40, 42, 43, and 44. As explained above, embodiments of the gas turbine system 10 may execute emissions control instructions using the load sensor 40 alone; using all the sensors 40, 42, 43, and 44; using sensors 40 and 42; or using sensors 40 and 44 to determine the ratio CO₂ emissions/energy and maintain the ratio below a threshold ratio. Embodiments using all four sensors 40, 42, 43, and 44 may advantageously determine a predicted ratio using sensors 40, 42, and 43; and an actual ratio using sensors 40 and 44. Sensor feedback and determination of ratios provides redundant measurement ensuring that the CO₂ emissions/energy ratio of gas turbine system 10 remains at or below the threshold ratio.

The next step in method 150 is determining if CO₂ levels are above a threshold ratio, represented by decision point 160. As explained above, the threshold ratio is an amount of CO₂ per unit of energy produced, e.g., pounds of CO₂ per mega watt hour (lbs/MWhr). If the CO₂ emissions/energy ratio is less than the threshold ratio then the method returns to block 152, measuring properties with sensors. If the CO₂ emissions/energy ratio is greater than the threshold ratio, then the method 150 may proceed to the step in block 162 and/or block 164. In block 162, the method 150 controls the fuel in the system 10 to reduce the CO₂ emissions. As explained above, the system 10 may use the fuel assembly 16 to change the composition or type of fuel, e.g., use low carbon or non-carbon fuels to produce less CO₂ gas. The method 150 may also control the amount of diluents 48 in the system 10 to reduce fuel consumption and thus CO₂ gas creation, represented as block 164. Specifically, the diluents 48 augment power production in the gas turbine system 10 reducing fuel requirements and the corresponding CO₂ gas emissions. Accordingly, the system 10 may maintain the ratio of CO₂ emissions per unit of energy produced at or below the threshold ratio.

Technical effects of the invention include a system and method capable of maintaining a ratio of CO₂ emissions per unit of energy produced below a threshold ratio with continuously changing loads on a gas turbine engine. The systems include a controller that may receive sensor feedback from a variety of sensors that measure loads, carbon content in the fuel, temperature of fuels, temperature of diluents, and CO₂ gas levels in the exhaust. The system may then adjust the CO₂ emissions/energy ratio based on input from the sensors by changing fuel, changing fuel composition, changing the amount of fuel, and/or adding diluents for augmenting power.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system, comprising:
controller (37) configured to control a first fuel supply (70), a second fuel supply (72), or at least one diluent supply (80) to adjust a percentage of carbon in a combustor (22) of a gas turbine engine (12) to maintain a ratio of carbonaceous emissions in an exhaust gas per unit of energy produced by the gas turbine engine (12) at or below a threshold ratio.

2. The controller of claim 1, further configured to control a carbon content of a fuel mixture of a first fuel from the first fuel supply (70) and a second fuel from the second fuel supply (72) to maintain the ratio at or below the threshold ratio.

3. The controller of claim 1 or 2, further configured to control flow of at least one diluent from the at least one diluent supply (80) into the combustor (12) of the gas turbine engine (12) to maintain the ratio at or below the threshold ratio.

4. The controller of any of claims 1 to 3, further configured to adjust the percentage of carbon in the combustor (22) to adjust the carbonaceous emissions in response to sensor feedback indicative of a fuel composition, an exhaust composition, a fuel temperature, a diluent temperature, a load or power output, or a combination thereof.

5. The controller of any of claims 1 to 4, further configured to reduce the percentage of carbon in the combustor (12) to reduce the carbonaceous emissions during a startup condition, a shutdown condition, or a low load condition.

6. The controller of claim 5, further configured to increase the percentage of carbon in the combustor (12) during a steady state condition or a high load condition.

7. The controller of any of claims 1 to 6, further configured to adjust the percentage of carbon in the combustor (12) to maintain the ratio of carbon dioxide gas created per unit of energy produced by the gas turbine engine at or below the threshold ratio.

8. A system, comprising:
a turbine fluid supply system, comprising:
a fuel supply assembly (16), comprising:
a first fuel supply (70) configured to supply a first fuel to a gas turbine engine(12); and
a second fuel supply (72) configured to supply a second fuel to the gas turbine engine (12), wherein the first fuel has a greater carbon content than the second fuel; and
a diluent supply assembly (18) comprising at least one diluent supply (80) configured to supply at least one diluent to the gas turbine engine (12); and
the controller of any of claims 1 to 7.

9. The system of claim 8, wherein the fuel supply assembly (16) comprises a mixing chamber (74) configured to mix the first and second fuels upstream of the combustor (22) of the gas turbine engine (12).

10. The system of claim 8 or 9, wherein the first fuel supply (70) is a carbonaceous fuel supply and the second fuel supply (72) is a hydrogen fuel supply.

11. The system of any of claims 8 to 10, wherein the at least one diluent supply (80) comprises a steam supply, a nitrogen supply, or a combination thereof.

12. The system of any of claims 8 to 11, comprising the gas turbine engine (12) having the turbine fluid supply system.

13. A method, comprising:
receiving feedback from at least one sensor;
monitoring a ratio of carbonaceous emissions created per unit of energy produced by a gas turbine engine (12) based on the feedback;
determining whether the ratio is greater than a threshold ratio; and
controlling a first fuel supply (70), a second fuel supply (72), or at least one diluent supply (80) to adjust a percentage of carbon in a combustor (22) of the gas turbine engine (12) to maintain the ratio at or below a threshold ratio.

14. The method of claim 13, wherein controlling comprises controlling a carbon content of a fuel mixture of a first fuel from the first fuel supply (70) and a second fuel from the second fuel supply (72) to maintain the ratio at or below the threshold ratio.

15. The method of claim 13 or 14, wherein controlling comprises controlling flow of at least one diluent from the at least one diluent supply (80) into the combustor (22) of the gas turbine engine (12) to maintain the ratio at or below the threshold ratio.
